# EUROPEAN PATENT SPECIFICATION

(11) **EP 4 468 682 B1**
(45) Date of publication and mention of the grant of the patent: **25.02.2026**
(21) Application number: 22933148.3
(22) Date of filing: 08.12.2022
(51) Int. Cl.: H04L 67/12, H04W 84/18, H04W 4/70, H04L 12/46, G16Y 30/00, H04L 41/12, H04L 41/00, H04W 76/10

(54) **INTERNET OF THINGS (IOT) DEVICE INTERCONNECTION METHOD AND APPARATUS**
VERFAHREN UND VORRICHTUNG ZUR VERBINDUNG VON INTERNET-DER-DINGE (IOT)-VORRICHTUNGEN
PROCÉDÉ ET APPAREIL D'INTERCONNEXION DE DISPOSITIF DE L'INTERNET DES OBJETS (IOT)

(30) Priority: 24.03.2022 CN 202210296929
(43) Date of publication of application: 27.11.2024
(73) Proprietor: Huawei Technologies Co., Ltd., Shenzhen, Guangdong 518129 (CN)
(72) Inventor: LIU, Anlong, Shenzhen, Guangdong 518129 (CN)
(74) Representative: Goddar, Heinz J.
(86) International application number: PCT/CN2022/137571
(87) International publication number: WO 2023/179097

(56) References cited:
- WO-A1-2021/057610
- CN-A- 111 372 222
- CN-A- 113 596 176
- CN-A- 113 645 298
- US-A1- 2019 387 458
- US-A1- 2021 345 075

## Description

### TECHNICAL FIELD

This application relates to the field of communication technologies, and in particular, to an internet of things IoT device interconnection method and an apparatus.

### BACKGROUND

Internet of things (Internet of things, IoT) devices will replace existing devices in home life, travel life, school education, intelligent transportation, intelligent government administration, and the like. Currently, a connection between the IoT devices depends on a user operation on a smartphone, to implement user information exchange. However, as a quantity of IoT devices increases, connection complexity of a plurality of IoT devices also increases, making user operations cumbersome.

US20190387458A1 is related to Mechanisms for discovering ad hoc Service Layer Entities (aSLEs) either deployed in ad hoc or switched from normal operation mode to ad hoc mode can support an IoT service in a distributive self-organized system.

US20210345075A1 is related to technology to generate first name information corresponding to data and/or content for an autonomous vehicle to represent vehicular application information based on requirements of the vehicular application information, and generate second name information corresponding to a chain of functions for an autonomous vehicle based on the requirements of the vehicular application information.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

Embodiments of this application provide an internet of things IoT device interconnection method and an apparatus, to reduce connection complexity of IoT devices, facilitate user operations, and improve intelligence of the IoT devices.

To achieve the foregoing objective, embodiments of this application provide the following technical solutions.

According to a first aspect, an internet of things IoT device interconnection method is provided. The method includes: A first IoT device broadcasts description information of the first IoT device, where the description information of the first IoT device includes a first application scenario identifier and performance information of the first IoT device, the first application scenario identifier is used by an IoT device that receives the description information of the first IoT device to determine whether to establish a connection to the first IoT device, the performance information of the first IoT device is used by the IoT device that receives the description information of the first IoT device to determine a central device in a device combination, the device combination includes the first IoT device and an IoT device connected to the first IoT device, and the central device in the device combination is used by the device combination to exchange information with an external device. The first IoT device receives a first connection result sent by a second IoT device, where the first connection result includes first information, the first information indicates the second IoT device to establish a connection to the first IoT device, the first connection result further includes an identifier of a central device in a first device combination, and the first device combination is a device combination including the second IoT device.

Currently, connections among a plurality of IoT devices depend on user operations on a smartphone. As IoT devices are more widely used in various scenarios, complexity of establishing connections among the IoT devices also increases, making user operations cumbersome. Therefore, according to this technical solution, a connection is established through data exchange between IoT devices, and a device combination is formed, so that information flows within the device combination and between device combinations, to facilitate user operations. In addition, because information flows automatically, different IoT devices automatically update device statuses based on the information flow. This helps improve user experience in a complex IoT scenario.

In a possible implementation, the first information specifically indicates to establish a same-type connection or a different-type connection between the first IoT device and the second IoT device; the same-type connection is a connection manner between the first IoT device and the second IoT device when application scenarios of the first IoT device and the second IoT device are the same; and the different-type connection is a connection manner between the first IoT device and the second IoT device when application scenarios of the first IoT device and the second IoT device are different.

This possible implementation provides two connection types for establishing a connection between IoT devices, to help improve applicability of a device combination in different scenarios.

In a possible implementation, the description information of the first IoT device further includes a device type of the first IoT device, and the device type is used by the IoT device that receives the description information of the first IoT device to determine, when an application scenario of the IoT device is different from an application scenario of the first IoT device, whether to establish a connection to the first IoT device.

This possible implementation provides a specific implementation in which when an IoT device is connected to another IoT device in a different application scenario, a device function is determined based on a device type. This helps improve implementability of the solution.

In a possible implementation, the performance information of the first IoT device includes computing power information and/or standby information, the computing power information represents a data processing capability of the first IoT device, and the standby information represents a battery endurance capability of the first IoT device.

This possible implementation provides a specific parameter for measuring device performance, where the parameter is used to determine a central device in a device combination. Specifically, data processing capabilities and continuous standby capabilities of devices are respectively compared based on computing power and standby situations of the IoT devices. A device with higher computing power and a better standby situation is used as the central device to process other information in the device combination.

In a possible implementation, when the first IoT device is the central device in the first device combination, the method further includes: The first IoT device broadcasts the description information of the first IoT device. The first IoT device receives a second connection result sent by a third IoT device, where the second connection result includes third information, the third information indicates the third IoT device to establish a connection to the first IoT device, the second connection result further includes an identifier of a central device in a second device combination, and the second device combination is a device combination including the third IoT device.

This possible implementation provides a specific implementation in which a central device in a device combination is connected to an external device for the combination. This manner facilitates information exchange between the device combination and the external device, and improves intelligence of IoT devices.

In a possible implementation, when the first IoT device is the central device in the first device combination, the method further includes: The first IoT device receives a data request message sent by a fourth IoT device, where the data request message represents that the fourth IoT device requests to obtain data information from the first IoT device. The first IoT device sends a data response message to the fourth IoT device based on the data request message, where the data response message includes the data information required by the fourth IoT device.

This possible implementation provides a specific implementation in which an external device outside a device combination aggregates data information to a central device. This facilitates information exchange between IoT devices, and improves intelligence of the IoT devices.

In a possible implementation, when the second IoT device is the central device in the first device combination, the method further includes: The first IoT device receives a central device change request message sent by a third IoT device, where the central device change request message indicates that the third IoT device is a central device in a second device combination, and the second device combination includes the first IoT device, the second IoT device, and the third IoT device. The first IoT device sends a disconnection request message to the second IoT device based on the central device change request message, where the disconnection request message is used to disconnect from the second IoT device.

This possible implementation provides a specific implementation in which a central device in a device combination is disconnected from a general device in the device combination when the central device changes in a process in which the central device in the device combination is connected to an external device. This helps the device combination automatically update an environment in the combination, and improves smoothness of information exchange.

According to a second aspect, an IoT device interconnection method is provided. The method includes: A second IoT device receives description information of a first IoT device, where the description information of the first IoT device includes a first application scenario identifier and performance information of the first IoT device. The second IoT device determines, based on at least the first application scenario identifier and a second application scenario identifier of the second IoT device, whether to establish a connection to the first IoT device. When the second IoT device determines to establish a connection to the first IoT device, the second IoT device determines an identifier of a central device in a first device combination based on the performance information of the first IoT device and performance information of the second IoT device, where the first device combination includes the first IoT device and the second IoT device, and the central device in the first device combination is used by the first device combination to exchange information with an external device. The second IoT device sends a connection result to the first IoT device, where the connection result includes first information, the first information indicates the second IoT device to establish a connection to the first IoT device, and the connection result further includes the identifier of the central device in the first device combination.

Currently, connections among a plurality of IoT devices depend on user operations on a smartphone. As IoT devices are more widely used in various scenarios, complexity of establishing connections among the IoT devices also increases, making user operations cumbersome. Therefore, according to this technical solution, a connection is established through data exchange between IoT devices, and a device combination is formed, so that information flows within the device combination and between device combinations, thereby facilitating user operations. In addition, because information flows automatically, different IoT devices automatically update device statuses based on the information flow. This helps improve user experience in a complex IoT scenario.

In a possible implementation, that the second IoT device determines, based on at least the first application scenario identifier and a second application scenario identifier of the second IoT device, whether to establish a connection to the first IoT device includes: If the first application scenario identifier is the same as the second application scenario identifier, the second IoT device determines to establish a same-type connection to the first IoT device. The first information specifically indicates to establish the same-type connection between the first IoT device and the second IoT device.

This possible implementation provides a specific implementation in which a same-type connection is established between IoT devices. This helps establish a device combination in a same application scenario, and improve intelligence of the IoT devices.

In a possible implementation, the description information of the first IoT device further includes a device type of the first IoT device. That the second IoT device determines, based on at least the first application scenario identifier and a second application scenario identifier of the second IoT device, whether to establish a connection to the first IoT device includes: If the first application scenario identifier is different from the second application scenario identifier, when the device type of the first IoT device is a device type absent from a device model of the second IoT device, the second IoT device determines to establish a different-type connection to the first IoT device, where the device model is a preset set including types of devices in a device combination involving the second IoT device. The first information specifically indicates to establish the different-type connection between the first IoT device and the second IoT device.

This possible implementation provides a specific implementation in which a different-type connection is established between IoT devices. This helps establish a device combination in different application scenarios, and improve intelligence of the IoT devices.

In a possible implementation, the performance information of the first IoT device includes computing power information and/or standby information, the computing power information represents a data processing capability of the first IoT device, and the standby information represents a battery endurance capability of the first IoT device.

This possible implementation provides a specific parameter for measuring device performance, where the parameter is used to determine a central device in a device combination. Specifically, data processing capabilities and continuous standby capabilities of devices are respectively compared based on computing power and standby situations of the IoT devices. A device with higher computing power and a better standby situation is used as the central device to process other information in the device combination.

In a possible implementation, the method further includes: When the second IoT device determines not to establish a connection to the first IoT device, the second IoT device sends second information to the first IoT device, where the second information indicates the second IoT device not to establish a connection to the first IoT device.

This possible implementation provides a specific implementation in which an IoT device rejects establishment of a connection. This helps improve implementability of the solution.

In a possible implementation, the first IoT device is the central device in the first device combination. The method further includes: The second IoT device receives a central device change request message sent by a third IoT device, where the central device change request message indicates that the third IoT device is a central device in a second device combination, and the second device combination includes the first IoT device, the second IoT device, and the third IoT device. The second IoT device sends a disconnection request message to the first IoT device based on the central device change request message, where the disconnection request message is used to disconnect from the first IoT device.

This possible implementation provides a specific implementation in which a central device in a device combination is disconnected from a general device in the device combination when the central device changes in a process in which the central device in the device combination is connected to an external device. This helps the device combination automatically update an environment in the combination, and improves smoothness of information exchange.

In a possible implementation, the second IoT device is the central device in the first device combination. The method further includes: The second IoT device broadcasts description information of the second IoT device, where the description information of the second IoT device includes the second application scenario identifier and the performance information of the second IoT device, the second application scenario identifier is used by an IoT device that receives the description information of the second IoT device to determine whether to establish a connection to the second IoT device, the performance information of the second IoT device is used by the IoT device that receives the description information of the second IoT device to determine a central device in a second device combination, and the second device combination includes the second IoT device and a device that establishes a connection to the second IoT device. The second IoT device receives a second connection result sent by a third IoT device, where the second connection result includes second information, the second information indicates the third IoT device to establish a connection to the second IoT device, the second connection result further includes an identifier of the central device in the second device combination, and the second device combination includes the first IoT device, the second IoT device, and the third IoT device.

This possible implementation provides a specific implementation in which a central device in a device combination is connected to an external device for the combination. This manner facilitates information exchange between the device combination and the external device, and improves intelligence of IoT devices.

According to a third aspect, an IoT device is provided. The IoT device includes functional units configured to perform any method provided in the first aspect. Actions performed by the functional units are implemented by hardware or implemented by hardware executing corresponding software. For example, the IoT device may include a sending unit and a receiving unit. The sending unit is configured to broadcast description information of a first IoT device, where the description information of the first IoT device includes a first application scenario identifier and performance information of the first IoT device, the first application scenario identifier is used by an IoT device that receives the description information of the first IoT device to determine whether to establish a connection to the first IoT device, the performance information of the first IoT device is used by the IoT device that receives the description information of the first IoT device to determine a central device in a device combination, the device combination includes the first IoT device and an IoT device connected to the first IoT device, and the central device in the device combination is used by the device combination to exchange information with an external device. The receiving unit is configured to receive a first connection result sent by a second IoT device, where the first connection result includes first information, the first information indicates the second IoT device to establish a connection to the first IoT device, the first connection result further includes an identifier of a central device in a first device combination, and the first device combination is a device combination including the second IoT device.

According to a fourth aspect, an IoT device is provided. The IoT device includes functional units configured to perform any method provided in the second aspect. Actions performed by the functional units are implemented by hardware or implemented by hardware executing corresponding software. For example, the IoT device may include a receiving unit, a processing unit, and a sending unit. The receiving unit is configured to receive description information of a first IoT device, where the description information of the first IoT device includes a first application scenario identifier and performance information of the first IoT device. The processing unit is configured to determine, based on at least the first application scenario identifier and a second application scenario identifier of a second IoT device, whether to establish a connection to the first IoT device. The processing unit is further configured to: when determining to establish a connection to the first IoT device, determine an identifier of a central device in a first device combination based on the performance information of the first IoT device and performance information of the second IoT device, where the first device combination includes the first IoT device and the second IoT device, and the central device in the first device combination is used by the first device combination to exchange information with an external device. The sending unit is configured to send a connection result to the first IoT device, where the connection result includes first information, the first information indicates the second IoT device to establish a connection to the first IoT device, and the connection result further includes the identifier of the central device in the first device combination.

According to a fifth aspect, a communication apparatus is provided. The communication apparatus includes: a transmitter, configured to broadcast description information of a first IoT device, where the description information of the first IoT device includes a first application scenario identifier and performance information of the first IoT device, the first application scenario identifier is used by an IoT device that receives the description information of the first IoT device to determine whether to establish a connection to the first IoT device, the performance information of the first IoT device is used by the IoT device that receives the description information of the first IoT device to determine a central device in a device combination, the device combination includes the first IoT device and an IoT device connected to the first IoT device, and the central device in the device combination is used by the device combination to exchange information with an external device; and a receiver, configured to receive a first connection result sent by a second IoT device, where the first connection result includes first information, the first information indicates the second IoT device to establish a connection to the first IoT device, the first connection result further includes an identifier of a central device in a first device combination, and the first device combination is a device combination including the second IoT device.

According to a sixth aspect, a communication apparatus is provided. The communication apparatus includes: a receiver, configured to receive description information of a first IoT device, where the description information of the first IoT device includes a first application scenario identifier and performance information of the first IoT device; a processor, configured to determine, based on at least the first application scenario identifier and a second application scenario identifier of a second IoT device, whether to establish a connection to the first IoT device, where the processor is further configured to: when determining to establish a connection to the first IoT device, determine an identifier of a central device in a first device combination based on the performance information of the first IoT device and performance information of the second IoT device, where the first device combination includes the first IoT device and the second IoT device, and the central device in the first device combination is used by the first device combination to exchange information with an external device; and a transmitter, configured to send a connection result to the first IoT device, where the connection result includes first information, the first information indicates the second IoT device to establish a connection to the first IoT device, and the connection result further includes the identifier of the central device in the first device combination.

According to a seventh aspect, a chip is provided. The chip includes a processor and an interface circuit. The interface circuit is configured to receive code instructions and transmit the code instructions to the processor. The processor is configured to run the code instructions to perform any method provided in the first aspect or the second aspect.

According to an eighth aspect, a communication system is provided. The communication system includes the apparatuses provided in the third aspect and the fourth aspect, or the apparatuses provided in the fifth aspect and the sixth aspect.

According to a ninth aspect, a computer-readable storage medium is provided. The computer-readable storage medium includes computer-executable instructions. When the computer-executable instructions are run on a computer, the computer is enabled to perform any method provided in the first aspect or the second aspect.

According to a tenth aspect, a computer program product is provided. The computer program product includes computer-executable instructions. When the computer-executable instructions are run on a computer, the computer is enabled to perform any method provided in the first aspect or the second aspect.

For technical effects achieved by any implementation of the third aspect to the tenth aspect, refer to technical effects achieved by corresponding implementations of the first aspect or the second aspect. Details are not described herein again.

### BRIEF DESCRIPTION OF DRAWINGS

FIG. 1 is a diagram of a structure of an IoT device according to an embodiment of this application;
FIG. 2 is a diagram of an IoT device connection scenario;
FIG. 3 is a schematic flowchart of an IoT device interconnection method according to an embodiment of this application;
FIG. 4 is a schematic flowchart of an IoT device interconnection method according to an embodiment of this application;
FIG. 5 is a schematic flowchart of an IoT device interconnection method according to an embodiment of this application;
FIG. 6 is a schematic flowchart of an IoT device interconnection method according to an embodiment of this application;
FIG. 7 is a schematic flowchart of an IoT device interconnection method according to an embodiment of this application;
FIG. 8 is a diagram of composition of an IoT device according to an embodiment of this application; and
FIG. 9 is a diagram of composition of an IoT device according to an embodiment of this application.

### DESCRIPTION OF EMBODIMENTS

In descriptions of this application, unless otherwise specified, "/" means "or". For example, A/B may mean A or B. The term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. The terms such as "first" and "second" do not limit a quantity and an execution sequence, and the terms such as "first" and "second" do not indicate a definite difference.

It should be noted that, in this application, the terms such as "example" or "for example" represent giving an example, an illustration, or a description. Any embodiment or design scheme described as an "example" or "for example" in this application should not be explained as being more preferred or having more advantages than another embodiment or design scheme. To be precise, use of the terms "example", "for example", or the like is intended to present a related concept in a specific manner.

An embodiment of this application provides an internet of things IoT device interconnection method, and the method may be applied to an IoT device. An internet of things (Internet of things) may be understood as an "internet that connects everything", and is used to implement information exchange between things and between people and things. The information exchange includes overall sensing, reliable transmission, and intelligent processing. The overall sensing may be understood as a process of obtaining various types of information about a person or an object by using a sensing device, for example, radio frequency identification, an infrared sensor, a global positioning system, or a laser scanner. The reliable transmission may be understood as real-time and accurate transmission of sensed information through the internet, a wireless network, or the like, to facilitate information exchange and sharing. The intelligent processing refers to intelligent processing of sensed and transmitted data by using an intelligent technology. The IoT device may be any device that completes one or more processes in the foregoing information exchange. The IoT device may be a smart television, an augmented reality (augmented reality, AR) device, a virtual reality (virtual reality, VR) device, a tablet computer, a smart speaker, a smart lamp, a smartwatch, a smart band, or the like. Certainly, in the following embodiments, a specific form of the IoT device is not limited.

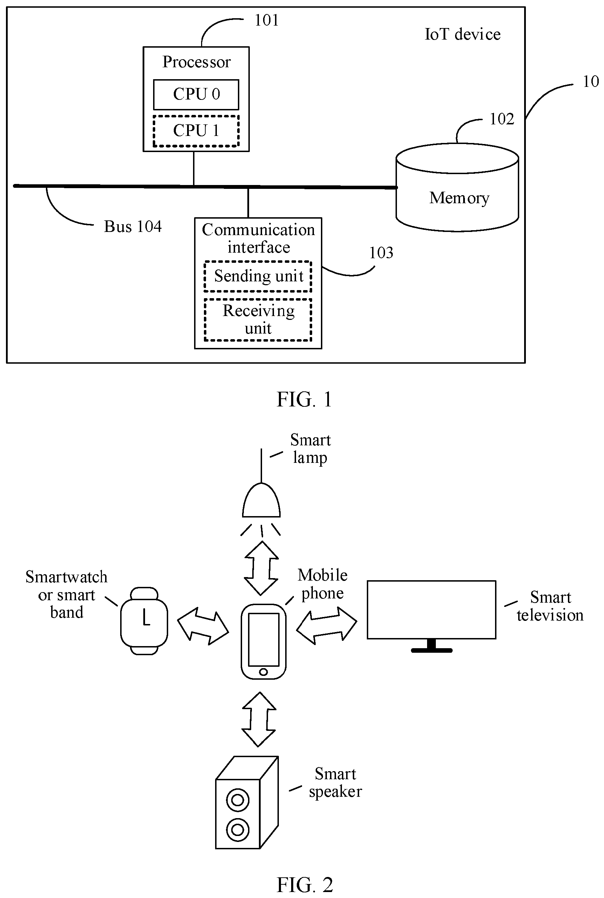

In a hardware implementation, the foregoing IoT device may be implemented by an IoT device shown in FIG. 1. FIG. 1 is a diagram of a hardware structure of an IoT device 10 according to an embodiment of this application. The IoT device 10 may be configured to implement a function of the foregoing IoT device.

The IoT device 10 shown in FIG. 1 may include a processor 101, a memory 102, a communication interface 103, and a bus 104. The processor 101, the memory 102, and the communication interface 103 may be connected to each other through the bus 104.

The processor 101 is a control center of the IoT device 10, and may be a general-purpose central processing unit (central processing unit, CPU), another general-purpose processor, or the like. The general-purpose processor may be a microprocessor, any conventional processor, or the like.

For example, the processor 101 may include one or more CPUs, for example, a CPU 0 and a CPU 1 that are shown in FIG. 1.

The memory 102 may be a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a magnetic disk storage medium or another magnetic storage device, or any other medium capable of carrying or storing expected program code in a form of instructions or a data structure and capable of being accessed by a computer, but is not limited thereto.

In a possible implementation, the memory 102 may be independent of the processor 101. The memory 102 may be connected to the processor 101 through the bus 104, and is configured to store data, instructions, or program code. When the processor 101 invokes and executes the instructions or the program code stored in the memory 102, the processor 101 can implement the IoT device interconnection method provided in embodiments of this application.

In another possible implementation, the memory 102 may alternatively be integrated with the processor 101.

The communication interface 103 is configured to connect the IoT device 10 to another device through a communication network. The communication network may be the Ethernet, a radio access network (radio access network, RAN), a wireless local area network (wireless local area network, WLAN), or the like. The communication interface 103 may include a receiving unit configured to receive data and a sending unit configured to send data.

The bus 104 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 1, but it does not represent that there is only one bus or one type of bus.

It should be noted that the structure shown in FIG. 1 does not constitute a limitation on the IoT device 10. In addition to the components shown in FIG. 1, the IoT device 10 may include more or fewer components than those shown in the figure, combine some components, or have different component arrangements.

Currently, a main manner of establishing a connection between an IoT device and a plurality of IoT devices is to use a mobile phone as a control center and depend on a manual operation of a user, as shown in FIG. 2. With improvement of an intelligent living standard, IoT devices are used in various scenarios, but an existing manner of connecting these IoT devices requires user intervention. When there are a large quantity of IoT devices, a connection process is complex. In addition, when a plurality of IoT devices are connected and managed through a mobile phone, a combination manner centered on mobile phones is simple.

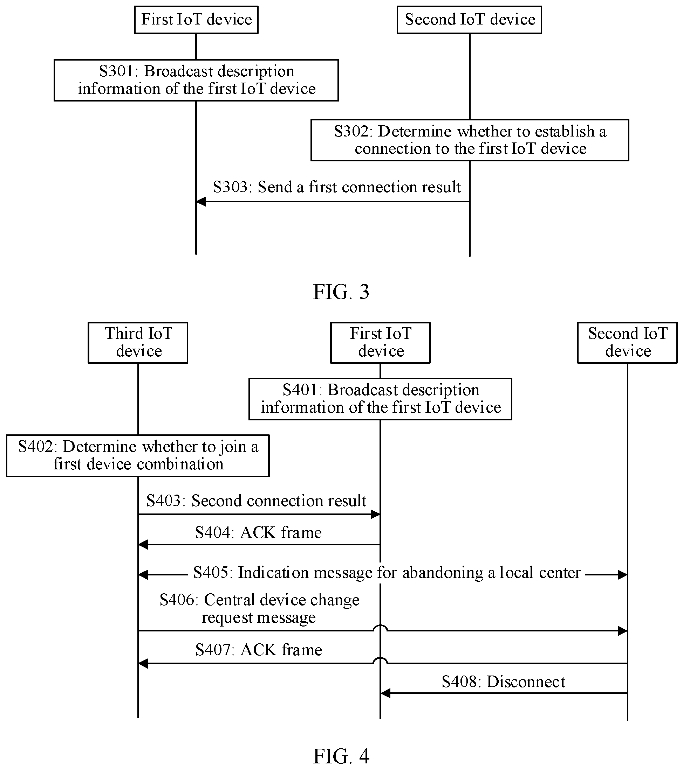

To resolve a problem of a complex IoT device connection in a complex IoT scenario, this application provides an IoT device interconnection method. IoT devices are automatically interconnected, to reduce connection complexity of the IoT devices, facilitate user operations, and improve intelligence of the IoT devices. As shown in FIG. 3, the method includes the following steps.

S301: A first IoT device broadcasts description information of the first IoT device.

Correspondingly, a second IoT device receives the description information of the first IoT device that is broadcast by the first IoT device.

The description information of the first IoT device includes a first application scenario identifier and performance information of the first IoT device.

It may be understood that the first application scenario identifier identifies an application scenario of the first IoT device. For example, Table 1 below shows a correspondence between a first application scenario identifier and an application scenario.

**Table 1**

| First application scenario identifier | Application scenario |
|---|---|
| 001 | Healthcare |
| 010 | Travel |
| 011 | Education |
| 100 | Office |
| 101 | Entertainment |

Specifically, when the application scenario is healthcare, it indicates that the IoT device is used in the healthcare field. For example, a sensing device configured to detect a heart rate, a body temperature, and the like of a user may be used in this scenario. An IoT device used in a travel scenario may be an intelligent device, for example, a navigation device or an in-vehicle speaker. An IoT device used in an education scenario may be a device, for example, a smart display screen or a smart headset. The foregoing is merely used as an example, and names and a quantity of application scenarios are not limited in this application. It may be understood that different IoT devices may include a plurality of application scenarios.

The performance information of the first IoT device represents performance of the first IoT device. The performance information is used by an IoT device that receives the description information of the first IoT device to determine a central device in a device combination. The device combination includes the first IoT device and an IoT device connected to the first IoT device. The central device in the device combination is used by the device combination to exchange information with an external device.

Optionally, the performance information of the first IoT device includes computing power information and/or standby information. The computing power information represents a data processing capability of the first IoT device, and the standby information represents a battery endurance capability of the first IoT device. Specifically, the computing power information and the standby information may be represented by unified measurement units. For example, the computing power information is represented by a dominant frequency of a processor in an IoT device or a quantity of CPUs in the IoT device, and the standby information is represented by a remaining battery level of the IoT device. When the IoT device is in a charging state, it may be considered that the remaining battery level is infinite.

It should be noted that the first application scenario identifier may be preset on the first IoT device, and measurement units of the two types of information in the performance information are also preset on the first IoT device. It may be understood that the performance information is closely related to a usage of the IoT device. Therefore, information that represents performance of the IoT device should be real-time information.

It should be noted that the first IoT device may periodically broadcast the description information, and a broadcast period is preset based on the IoT device. This is not limited in this application.

S302: The second IoT device determines whether to establish a connection to the first IoT device.

The second IoT device determines, based on at least the first application scenario identifier and a second application scenario identifier of the second IoT device, whether to establish a connection to the first IoT device, to form a first device combination. The first device combination includes the first IoT device and the second IoT device. The first device combination is a same-type combination or a different-type combination. The same-type combination is a device combination formed by establishing a same-type connection when application scenarios of the first IoT device and the second IoT device are the same. The different-type combination is a device combination formed by establishing a different-type connection when application scenarios of the first IoT device and the second IoT device are different.

Specifically, if the first application scenario identifier is the same as the second application scenario identifier, the second IoT device determines to establish the same-type connection to the first IoT device.

Refer to Table 1 above. For example, if the first application scenario identifier of the first IoT device is 1, and the second application scenario identifier of the second IoT device is also 1, in other words, the first IoT device and the second IoT device are used in the healthcare application scenario, the same-type connection may be established between the first IoT device and the second IoT device, to form the same-type combination.

Optionally, the description information of the first IoT device further includes a device type of the first IoT device. The device type represents a function of the IoT device, for example, a computing function, a sensing function, and an expression function. The computing function is used to process data, the sensing function is used to input data, and the expression function is used to output data. For example, the device type includes a video sensing type, a video expression type, an audio sensing type, and an audio expression type.

Optionally, the second IoT device forms a device combination based on a preset device model. The device model is a preset set including types of devices in a device combination involving the second IoT device. The model includes at least two IoT devices of different device types. For example, the model may be computing-sensing-expression. In this case, a connection needs to be established between the device combination and one or more IoT devices of a corresponding device type in the model. When the first application scenario identifier is different from the second application scenario identifier, and the device type of the first IoT device is a device type absent from a preset device model of the second IoT device, the device type is used by the second IoT device to determine to establish the different-type connection to the first IoT device.

For example, if the first application scenario identifier of the first IoT device is 1, and the second application scenario identifier of the second IoT device is 2, in other words, the application scenario of the first IoT device is healthcare, and the application scenario of the second IoT device is travel, the different-type connection may be established between the first IoT device and the second IoT device. The second IoT device determines to form the device combination based on the computing-sensing-expression model. If a device type of the second IoT device is computing, an IoT device whose device type is sensing or expression needs to be additionally connected to form the device combination.

It should be noted that a type of a connection to be established depends on the IoT device. For example, the same-type connection is preset on the first IoT device, and the same-type connection is preset on the second IoT device. When application scenario identifiers of the first IoT device and the second IoT device are the same, the second IoT device may perform the same-type connection.

Optionally, when the second IoT device determines to establish a connection to form the first device combination, the second IoT device further determines a central device in the first device combination based on the performance information of the first IoT device.

Specifically, the second IoT device compares the performance information of the first IoT device with performance information of the second IoT device, and determines an IoT device with better performance as the central device in the first device combination. The performance information includes computing power information and/or standby information. An IoT device with higher computing power and a stronger standby capability is usually used as the central device in the first device combination.

It should be noted that a manner of comparing computing power and standby capabilities is not limited in this application. When both the computing power and the standby capability are considered, different weights may be further allocated, and a sum of the computing power and the standby capability represents performance of the first IoT device. For example, the computing power and the standby capability each account for 50% of performance, and an IoT device with better performance in the first device combination is obtained through calculation. Alternatively, priorities of the computing power and the standby capability are preset on the IoT device. For example, if a priority of the computing power is higher than a priority of the standby capability, computing power of two IoT devices is preferentially compared, and when the computing power is the same, the standby capability is considered.

S303: The second IoT device sends a first connection result to the first IoT device.

Correspondingly, the first IoT device receives the first connection result. The first connection result includes first information and an identifier of the central device in the first device combination, and the first information indicates the second IoT device to establish a connection to the first IoT device.

Optionally, when the second IoT device determines not to establish a connection to the first IoT device, the second IoT device ignores the description information of the first IoT device, or sends second information to the first IoT device. The second information indicates the second IoT device not to establish a connection to the first IoT device.

That the second IoT device establishes a connection to the first IoT device includes the following four cases.

Case A: The second IoT device establishes the same-type connection to the first IoT device, and the first IoT device is the central device in the first device combination.

Case B: The second IoT device establishes the same-type connection to the first IoT device, and the second IoT device is the central device in the first device combination.

Case C: The second IoT device establishes the different-type connection to the first IoT device, and the first IoT device is the central device in the first device combination.

Case D: The second IoT device establishes the different-type connection to the first IoT device, and the second IoT device is the central device in the first device combination.

Optionally, in response to the first connection result sent by the second IoT device, the first IoT device sends an acknowledgment (ACK) frame to the second IoT device when the first IoT device has no objection. It may be understood that when the first IoT device has an objection to the connection, for example, the second IoT device needs to establish the same-type combination, the first IoT device needs to establish the different-type combination, and the application scenarios of the first IoT device and the second IoT device are the same, the second IoT device sends the first connection result to the first IoT device, and the first IoT device may reject the connection based on a requirement of the first IoT device.

It should be noted that, in the foregoing method, the first device combination may further include another device. Before the first IoT device establishes a connection to the second IoT device, the first IoT device and the second IoT device each may establish a connection to another IoT device to form a device combination, and each of the first IoT device and the second IoT device is used as a central device to connect to an external device. For example, if the first IoT device is a central device in a device combination 1, and the second IoT device is a central device in a device combination 2, the first device combination that is formed includes all devices in the device combination 1 and the device combination 2.

It should be noted that the foregoing communication link may be established in through Wi-Fi, infrared ray, or Bluetooth, or in another manner. This is not limited in this application.

The foregoing method helps reduce complexity of a user operation in a complex IoT device connection scenario, reduce connections in a topology network, form a device combination to complete information exchange within the combination and between combinations, and reduce unnecessary power consumption of IoT devices.

Optionally, after step S303, the first device combination is formed. The central device in the first device combination manages a relationship between the first device combination and an external device, and manages the another device in the first device combination. The external device refers to another device outside the first device combination, and the first device combination may access the another device and perform internal communication.

Optionally, after step S303, the first device combination is formed. The central device in the first device combination aggregates information about another member in the combination, performs intelligent processing on the information, and adaptively outputs an information processing result. It may be understood that the another member in the combination monitors user information, and periodically sends the user information to the central device. For example, in Case A, the first IoT device is the central device in the first device combination. In this case, the second IoT device periodically sends the monitored user information to the first IoT device, and the first IoT device processes the monitored user information. The information processing includes: The first IoT device collects statistics on a change of the user information; and when the change exceeds a threshold, the first IoT device outputs abnormality information. For example, in the healthcare scenario, when a body temperature of a user is higher than a normal body temperature of a human body, and is detected and transmitted to a smart display screen by a smart band worn by the user, the smart display screen, as a central device, outputs a body temperature abnormality message to the smart band and triggers vibration of the smart band, to remind the user that the current body temperature is excessively high. Alternatively, the smart display screen outputs reminder information, to remind the user that a current physical status is abnormal.

Optionally, the information processing result has different levels. The levels are classified into an emergency state and a non-emergency state based on emergency levels of the information processing result. When the information processing result is the emergency state, the central device sends the information processing result to all members in the first device combination, to remind the user in time. When the information processing result is the non-emergency state, the central device sends the information processing result to some members in the first device combination, to ensure privacy of the information processing result while reminding the user.

Optionally, when the information processing result is the non-emergency state, the central device may further obtain location information of the user, to send the information processing result to an IoT device located in a preset area. For example, when the user is in a living room, the central device sends the information processing result to a smartwatch or a mobile phone of the user, to ensure information privacy. When the user is in a restaurant, the central device sends the information processing result to a display screen in the restaurant, to ensure convenience of obtaining information by the user.

It should be noted that the foregoing information processing result has different level classification manners, and the foregoing is merely used as an example.

Optionally, after step S303, the central device in the first device combination broadcasts the description information, to add more internal members. Specifically, in Case A or Case C, the first IoT device and the second IoT device that form the first device combination may further perform the following steps. As shown in FIG. 4, steps S401 to S408 are included.

S401: The first IoT device broadcasts description information of the first IoT device.

Correspondingly, a third IoT device receives the description information broadcast by the first IoT device. This step is similar to step S301.

It may be understood that, in Case A, the first IoT device is the central device in the first device combination. To implement communication between the first device combination and another device outside the first device combination, the first IoT device broadcasts the description information of the first IoT device to the another device, so that the another device discovers and establishes a connection to the first IoT device. The third IoT device is any IoT device in the another device.

S402: The third IoT device determines, based on the description information of the first IoT device, whether to join the first device combination.

The first device combination includes the first IoT device and the second IoT device.

It may be understood that a factor considered when the third IoT device determines to join the first device combination is similar to that considered when the second IoT device joins the device combination including the first IoT device. Specifically, it is assumed that a second device combination is formed after the third IoT device determines to join the first device combination. In this case, the third IoT device needs to further determine a central device in the second device combination.

Specifically, the third IoT device determines whether the central device in the second device combination changes from the first IoT device to the third IoT device. A method in which the third IoT device determines the central device in the second device combination is the same as the foregoing method in which the second IoT device determines the central device in the first device combination. Details are not described herein again.

S403: The third IoT device sends a second connection result to the first IoT device.

The second connection result includes third information and an identifier of the central device in the second device combination, and the third information indicates the third IoT device to establish a connection to the first IoT device.

S404: The first IoT device sends an ACK frame to the third IoT device based on the second connection result.

If the third IoT device determines that the central device in the second device combination does not change, in other words, the central device is still the first IoT device, the first IoT device maintains a connection to the second IoT device, and continues to perform step S401 as the central device.

If the third IoT device determines that the central device in the second device combination changes to the third IoT device, devices in the second device combination need to disconnect from the central device in the original device combination, and establish connections to the third IoT device. Subsequently, the third IoT device interacts with an external device. Specifically, the foregoing process includes the following steps S405 to S408.

S405: The first IoT device sends, to the devices in the second device combination, an indication message for abandoning a local center.

Correspondingly, the second IoT device and the third IoT device in the second device combination receive the indication message.

Optionally, the second IoT device and the third IoT device send ACK frames to the first IoT device, to indicate that the indication message sent by the first IoT device is successfully received.

S406: The third IoT device sends a central device change request message to the second IoT device.

Correspondingly, the second IoT device receives the central device change request message.

It may be understood that in the first device combination, the central device is the first IoT device, and another member in the combination sends monitored data information to the central device for the central device to perform statistics collection, monitoring, or processing. When a new member joins, performance of the central device needs to be re-measured. If the central device is replaced, a new central device needs to notify another member in the combination, to complete update of the central device.

S407: The second IoT device sends a response message to the third IoT device based on the central device change request message of the third IoT device.

The response message is an ACK frame, and indicates that the second IoT device receives the central device change request message.

S408: The second IoT device sends a disconnection request message to the first IoT device.

It may be understood that, when the central device in the device combination changes, a general member in the device combination establishes a connection to the new central device, and disconnects from the original central device. The general member in a same-type device combination communicates with an external device through the central device, and aggregates information to the central device. The central device indicates, based on updated information, the general member to make a response. A central device connection is switched, to help reduce device power consumption of the general member and save a resource.

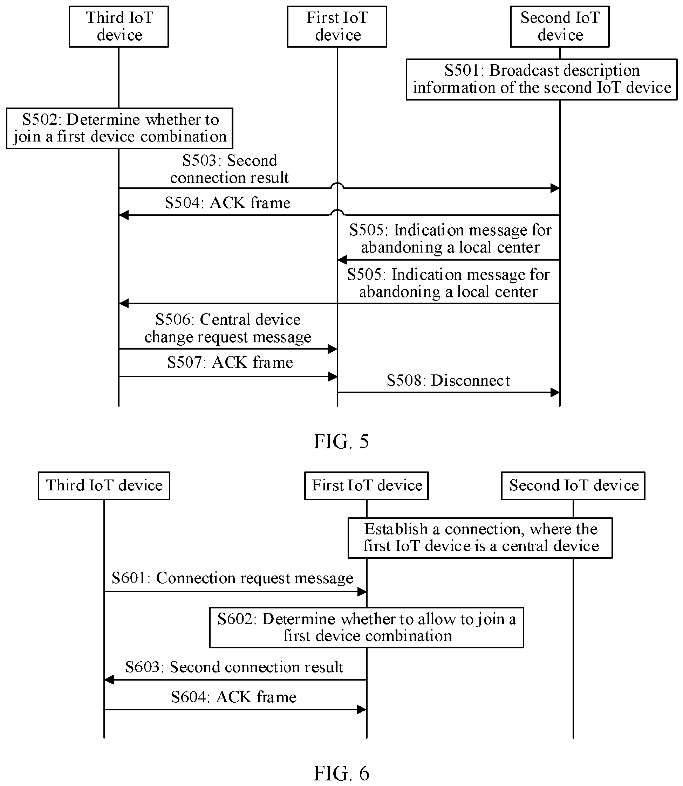

Optionally, after step S303, in Case B or Case D, the first IoT device and the second IoT device that form the first device combination may further perform the following steps. As shown in FIG. 5, steps S501 to S508 are included.

S501: The second IoT device broadcasts description information of the second IoT device.

The description information of the second IoT device includes a second application scenario identifier and performance information of the second IoT device. The second application scenario identifier is used by an IoT device that receives the description information of the second IoT device to determine whether to establish a connection to the second IoT device, the performance information of the second IoT device is used by the IoT device that receives the description information of the second IoT device to determine a central device in a second device combination, and the second device combination includes the second IoT device and a device that establishes a connection to the second IoT device.

Correspondingly, a third IoT device receives the description information broadcast by the second IoT device.

It may be understood that the second device combination includes the first IoT device and the second IoT device. When the second IoT device is the central device, another member in the combination is connected to the second IoT device.

S502 to S508 are similar to steps S402 to S408, and details are not described again.

According to the foregoing method, when a same-type connection is established between the first IoT device and the second IoT device to form a device combination, further, a new member may join the device combination, and information exchange within the combination and between combinations is formed, thereby reducing user operations in a process of connecting a plurality of IoT devices, and improving user experience in a complex IoT scenario.

Optionally, after step S303, the first IoT device establishes a connection to the second IoT device, and the central device in the first device combination receives a connection request message of an external device. The connection request message represents a request for establishing a connection between an external member and the central device. Specifically, Case A is used as an example. When the first IoT device is the central device, as shown in FIG. 6, steps S601 to S604 are included.

S601: A third IoT device sends a connection request message to the first IoT device.

The connection request message indicates that the third IoT device requests to establish a connection to the first IoT device.

Optionally, the connection request message includes description information of the third IoT device. For description information of an IoT device, refer to the foregoing descriptions.

S602: The first IoT device determines, based on the connection request message, whether to allow to join a first device combination.

It may be understood that if the third IoT device establishes a connection to the first IoT device, the third IoT device joins the first device combination to form a second device combination; or if the third IoT device fails to establish a connection to the first IoT device, the third IoT device does not join the first device combination.

Specifically, the first IoT device determines, based on the description information of the third IoT device, whether to allow the third IoT device to join the first device combination.

S603: The first IoT device sends a second connection result to the third IoT device.

For related descriptions of the second connection result, refer to the descriptions of step S403.

S604: The third IoT device sends an ACK frame to the first IoT device.

It should be noted that in step S603, the second connection result includes an identifier of a central device in the second device combination. If the first IoT device determines that the central device in the second device combination does not change, in other words, the central device is still the first IoT device, the first IoT device maintains a connection to the second IoT device, and is used as a central device to interact with an external device.

If the first IoT device determines that the central device in the second device combination changes to the third IoT device, devices in the second device combination need to disconnect from the central device in the original device combination, and establish connections to the third IoT device. Subsequently, the third IoT device interacts with an external device. For a specific process in which the central device changes, refer to the descriptions of steps S405 to S408.

Based on steps S601 to S604, the external device initiates a connection request to the central device in the device combination, and completes a connection.

Optionally, after step S602, if the first IoT device determines that the third IoT device cannot join the first device combination, the first IoT device sends a connection request rejection message to the third IoT device, or ignores the connection request message sent by the third IoT device. When an external device does not meet a condition for joining the first device combination, the first IoT device may reject establishment of a connection to the external device.

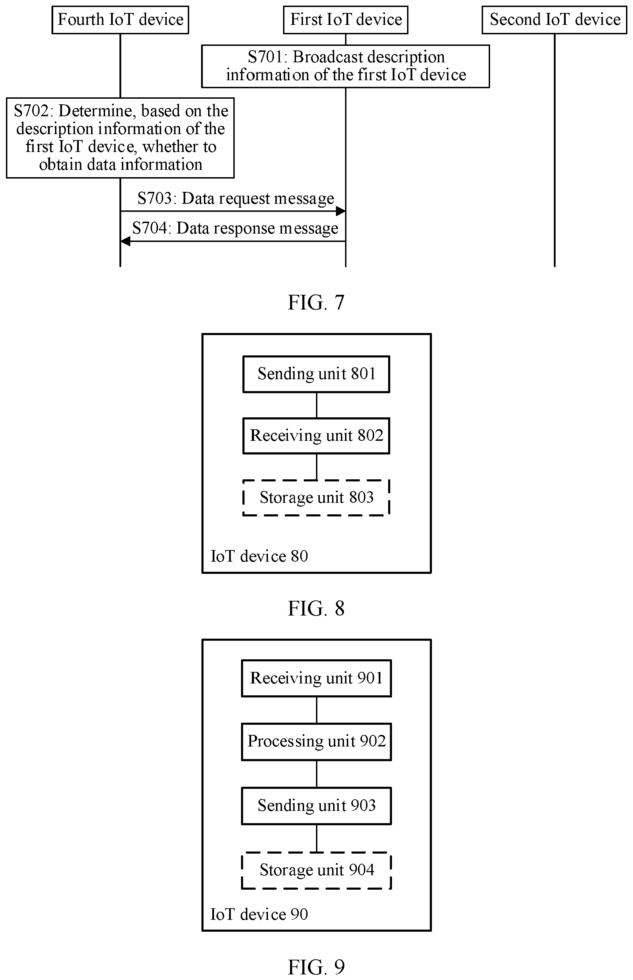

Optionally, after step S303, the first IoT device establishes a connection to the second IoT device, and the central device in the first device combination receives a data request message of an external device. The data request message represents a request of an external member for obtaining data from the central device. Specifically, Case A is used as an example. When the first IoT device is the central device, as shown in FIG. 7, steps S701 to S704 are included.

S701: The first IoT device broadcasts description information of the first IoT device.

Correspondingly, a fourth IoT device receives the description information of the first IoT device.

S702: The fourth IoT device determines, based on the description information of the first IoT device, whether to obtain data information.

Optionally, the fourth IoT device determines, based on a first application scenario identifier of the first IoT device, whether an application scenario of the first IoT device is the same as an application scenario of the fourth IoT device. If the application scenario of the first IoT device is the same as the application scenario of the fourth IoT device, the fourth IoT device obtains the data information from the first IoT device. If the application scenario of the first IoT device is different from the application scenario of the fourth IoT device, the fourth IoT device does not need to obtain the data information from the first IoT device.

It may be understood that when the application scenario of the first IoT device is the same as the application scenario of the fourth IoT device, that the fourth IoT device obtains the data information of the first IoT device helps form information exchange between devices in a same application scenario. For example, the data information may be user information. In this case, the fourth IoT device can complete the user information, and provide a user with a service that better meets a user requirement.

Specifically, when determining to obtain the data information, the fourth IoT device performs the following steps S703 and S704. When determining not to obtain the data information, the fourth IoT device ignores the description information of the first IoT device.

S703: The fourth IoT device sends a data request message to the first IoT device.

The data request message represents that the fourth IoT device requests to obtain the data information from the first IoT device.

Optionally, the data request message includes a type of data requested by the fourth IoT device. For example, the fourth IoT device requests to obtain user data in a first application scenario.

S704: The first IoT device sends a data response message to the fourth IoT device based on the data request message.

The data response message includes the data information required by the fourth IoT device.

Optionally, the first IoT device determines the data response message based on the type of the data in the data request message, and sends the data response message to the fourth IoT device.

Steps S701 to S704 help information automatically flow between devices, and improve intelligence of IoT devices.

The foregoing mainly describes the solutions in embodiments of this application from a perspective of the method. It may be understood that, to implement the foregoing functions, an IoT device includes at least one of a corresponding hardware structure and a corresponding software module for performing each function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the IoT devices may be divided into functional units based on the foregoing method examples. For example, each functional unit may be obtained through division based on each corresponding function, or two or more functions may be integrated into one processing unit. The integrated unit may be implemented in a form of hardware, or may be implemented in a form of a software functional unit. It should be noted that, in embodiments of this application, division into the units is an example, and is merely a logical function division. In an actual implementation, another division manner may be used.

For example, FIG. 8 is a diagram of a possible structure of an IoT device 80 denoting the first IoT device in the foregoing embodiments. The IoT device 80 includes a sending unit 801 and a receiving unit 802. The sending unit 801 is configured to broadcast description information of a first IoT device, where the description information of the first IoT device includes a first application scenario identifier and performance information of the first IoT device, the first application scenario identifier is used by an IoT device that receives the description information of the first IoT device to determine whether to establish a connection to the first IoT device, the performance information of the first IoT device is used by the IoT device that receives the description information of the first IoT device to determine a central device in a device combination, the device combination includes the first IoT device and an IoT device connected to the first IoT device, and the central device in the device combination is used by the device combination to exchange information with an external device, for example, perform step S301 shown in FIG. 3. The receiving unit 802 is configured to receive a first connection result sent by a second IoT device, where the first connection result includes first information, the first information indicates the second IoT device to establish a connection to the first IoT device, the first connection result further includes an identifier of a central device in a first device combination, and the first device combination is the device combination including a second IoT device, for example, perform step S303 shown in FIG. 3.

Optionally, the first information specifically indicates to establish a same-type connection or a different-type connection between the first IoT device and the second IoT device; the same-type connection is a connection manner between the first IoT device and the second IoT device when application scenarios of the first IoT device and the second IoT device are the same; and the different-type connection is a connection manner between the first IoT device and the second IoT device when application scenarios of the first IoT device and the second IoT device are different.

Optionally, the description information of the first IoT device further includes a device type of the first IoT device, and the device type is used by the IoT device that receives the description information of the first IoT device to determine, when an application scenario of the IoT device is different from an application scenario of the first IoT device, whether to establish a connection to the first IoT device.

Optionally, the performance information of the first IoT device includes computing power information and/or standby information, the computing power information represents a data processing capability of the first IoT device, and the standby information represents a battery endurance capability of the first IoT device.

Optionally, the sending unit 801 is further configured to broadcast the description information of the first IoT device. The receiving unit 802 is further configured to receive a second connection result sent by a third IoT device, where the second connection result includes third information, the third information indicates the third IoT device to establish a connection to the first IoT device, the second connection result further includes an identifier of a central device in a second device combination, and the second device combination is a device combination including the third IoT device.

Optionally, the receiving unit 802 is further configured to receive a data request message sent by a fourth IoT device, where the data request message represents that the fourth IoT device requests to obtain data information from the first IoT device. The sending unit 301 is further configured to send a data response message to the fourth IoT device based on the data request message, where the data response message includes the data information required by the fourth IoT device.

Optionally, the receiving unit 802 is further configured to receive a central device change request message sent by a third IoT device, where the central device change request message indicates that the third IoT device is a central device in a second device combination, and the second device combination includes the first IoT device, the second IoT device, and the third IoT device. The sending unit 801 is further configured to send a disconnection request message to the second IoT device based on the central device change request message, where the disconnection request message is used to disconnect from the second IoT device.

Optionally, the IoT device 80 further includes a storage unit 803. The storage unit 803 is configured to store computer-executable instructions, and another unit in a computer device may perform a corresponding action according to the computer-executable instructions stored in the storage unit 803.

For specific descriptions of the foregoing optional manners, refer to the foregoing method embodiments. Details are not described herein again. In addition, for explanations of any IoT device 80 provided above and descriptions of beneficial effects, refer to the foregoing corresponding method embodiments. Details are not described herein again.

For example, with reference to FIG. 1, some or all of implemented functions of the sending unit 801, the receiving unit 802, and the storage unit 803 in the IoT device 80 may be implemented by the processor 101 in FIG. 1 by executing the program code in the memory 102 in FIG. 1. Alternatively, the sending unit 801 may be implemented by a sending unit in the communication interface 103 in FIG. 1. Alternatively, the receiving unit 802 may be implemented by a receiving unit in the communication interface 103 in FIG. 1.

For example, FIG. 9 is a diagram of a possible structure of an IoT device 90 denoting the second IoT device in the foregoing embodiments. The IoT device 90 includes a receiving unit 901, a processing unit 902, and a sending unit 903. The receiving unit 901 is configured to receive description information of a first IoT device, where the description information of the first IoT device includes a first application scenario identifier and performance information of the first IoT device, for example, perform step S301 shown in FIG. 3. The processing unit 902 is configured to determine, based on at least the first application scenario identifier and a second application scenario identifier of a second IoT device, whether to establish a connection to the first IoT device. The processing unit 902 is further configured to: when determining to establish a connection to the first IoT device, determine an identifier of a central device in a first device combination based on the performance information of the first IoT device and performance information of the second IoT device, where the first device combination includes the first IoT device and the second IoT device, and the central device in the first device combination is used by the first device combination to exchange information with an external device, for example, perform step S302 shown in FIG. 3. The sending unit 903 is configured to send a connection result to the first IoT device, where the connection result includes first information, the first information indicates the second IoT device to establish a connection to the first IoT device, and the connection result further includes an identifier of the central device in the first device combination, for example, perform step S303 shown in FIG. 3.

Optionally, the processing unit 902 is specifically configured to: if the first application scenario identifier is the same as the second application scenario identifier, determine to establish a same-type connection to the first IoT device. The first information specifically indicates to establish the same-type connection between the first IoT device and the second IoT device.

Optionally, the description information of the first IoT device further includes a device type of the first IoT device, and the processing unit 902 is specifically configured to: if the first application scenario identifier is different from the second application scenario identifier, when the device type of the first IoT device is a device type absent from a device model of the second IoT device, determine to establish a different-type connection to the first IoT device, where the device model is a preset set including types of devices in a device combination involving the second IoT device. The first information specifically indicates to establish the different-type connection between the first IoT device and the second IoT device.

Optionally, the performance information of the first IoT device includes computing power information and/or standby information, the computing power information represents a data processing capability of the first IoT device, and the standby information represents a battery endurance capability of the first IoT device.

Optionally, the sending unit 903 is further configured to: when the second IoT device determines not to establish a connection to the first IoT device, send second information to the first IoT device, where the second information indicates the second IoT device not to establish a connection to the first IoT device.

Optionally, the receiving unit 901 is further configured to receive a central device change request message sent by a third IoT device, where the central device change request message indicates that the third IoT device is a central device in a second device combination, and the second device combination includes the first IoT device, the second IoT device, and the third IoT device. The sending unit 903 is further configured to send a disconnection request message to the first IoT device based on the central device change request message, where the disconnection request message is used to disconnect from the first IoT device.

Optionally, the sending unit 903 is further configured to broadcast description information of the second IoT device, where the description information of the second IoT device includes the second application scenario identifier and the performance information of the second IoT device, the second application scenario identifier is used by an IoT device that receives the description information of the second IoT device to determine whether to establish a connection to the second IoT device, the performance information of the second IoT device is used by the IoT device that receives the description information of the second IoT device to determine the central device in the second device combination, and the second device combination includes the second IoT device and a device that establishes a connection to the second IoT device. The receiving unit 901 is further configured to receive a second connection result sent by the third IoT device, where the second connection result includes second information, the second information indicates the third IoT device to establish a connection to the second IoT device, the second connection result further includes an identifier of the central device in the second device combination, and the second device combination includes the first IoT device, the second IoT device, and the third IoT device.

Optionally, the IoT device 90 further includes a storage unit 904. The storage unit 904 is configured to store computer-executable instructions, and another unit in a computer device may perform a corresponding action according to the computer-executable instructions stored in the storage unit 904.

For specific descriptions of the foregoing optional manners, refer to the foregoing method embodiments. Details are not described herein again. In addition, for explanations of any IoT device 90 provided above and descriptions of beneficial effects, refer to the foregoing corresponding method embodiments. Details are not described herein again.

For example, with reference to FIG. 1, some or all of implemented functions of the receiving unit 901, the processing unit 902, the sending unit 903, and the storage unit 904 in the IoT device 90 may be implemented by the processor 101 in FIG. 1 by executing the program code in the memory 102 in FIG. 1. Alternatively, the receiving unit 901 may be implemented by a receiving unit in the communication interface 103 in FIG. 1. Alternatively, the sending unit 903 may be implemented by a sending unit in the communication interface 103 in FIG. 1.

An embodiment of this application further provides a computer-readable storage medium. The computer-readable storage medium stores a computer program. When the computer program is run on a computer, the computer is enabled to perform any method performed by the computer device provided above.

For explanations of content related to any computer-readable storage medium provided above and descriptions of beneficial effects, refer to the foregoing corresponding embodiments. Details are not described herein again.

An embodiment of this application further provides a chip. The chip integrates a control circuit and one or more ports that are configured to implement a function of the foregoing IoT device. Optionally, for a function supported by the chip, refer to the foregoing descriptions. Details are not described herein again. A person of ordinary skill in the art may understand that all or some of the steps of the foregoing embodiments may be implemented by a program instructing related hardware. The foregoing program may be stored in a computer-readable storage medium. The storage medium mentioned above may be a read-only memory, a random access memory, or the like. The processing unit or the processor may be a central processing unit, a general-purpose processor, an application-specific integrated circuit (application-specific integrated circuit, ASIC), a microprocessor (digital signal processor, DSP), a field programmable gate array (field programmable gate array, FPGA) or another programmable logic device, a transistor logic device, a hardware component, or any combination thereof.

An embodiment of this application further provides a computer program product that includes instructions. When the instructions are run on a computer, the computer is enabled to perform any method in the foregoing embodiments. The computer program product includes one or more computer instructions. When the computer program instructions are loaded and executed on a computer, the procedures or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, an SSD), or the like.

It should be noted that all the foregoing components provided in embodiments of this application and configured to store the computer instructions or the computer program, for example, but not limited to, the memory, the computer-readable storage medium, and a communication chip, are non-transitory (non-transitory).

The foregoing embodiments may be wholly or partially implemented by using software, hardware, firmware, or any combination thereof. When a software program is used to implement the embodiments, the embodiments may be wholly or partially implemented in a form of a computer program product. The computer program product includes one or more computer instructions. When the computer program instructions are loaded and executed on a computer, the procedures or functions according to embodiments of this application are wholly or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

## Claims

1. An IoT device interconnection method, comprising:
broadcasting (S301), by a first IoT device, description information of the first IoT device, wherein the description information of the first IoT device comprises a first application scenario identifier and performance information of the first IoT device, the first application scenario identifier is used by a second IoT device that receives the description information of the first IoT device to determine (S302) whether to establish a connection to the first IoT device, the performance information of the first IoT device is used by the second IoT device that receives the description information of the first IoT device to determine a central device in a first device combination, the first
device combination comprises the first IoT device and the second IoT device connected to the first IoT device, and the central device in the first device combination is used by the first device combination to exchange information with an external device, wherein the external device is another device outside of the first device combination; and
receiving, by the first IoT device, a first connection result sent (S303) by the second IoT device, wherein the first connection result comprises first information, the first information indicates the second IoT device to establish a connection to the first IoT device, the first connection result further comprises an identifier of the central device in the first device combination;
forming, by the first IoT device, the first device combination with the second IoT device.

2. The method according to claim 1, wherein the first information specifically indicates to establish a same-type connection or a different-type connection between the first IoT device and the second IoT device;
the same-type connection is a connection manner between the first IoT device and the second IoT device when application scenarios of the first IoT device and the second IoT device are the same; and
the different-type connection is a connection manner between the first IoT device and the second IoT device when application scenarios of the first IoT device and the second IoT device are different.

3. The method according to claim 1 or 2, wherein the description information of the first IoT device further comprises a device type of the first IoT device, and the device type is used by the IoT device that receives the description information of the first IoT device to determine, when an application scenario of the IoT device is different from an application scenario of the first IoT device, whether to establish a connection to the first IoT device.

4. The method according to any one of claims 1 to 3, wherein the performance information of the first IoT device comprises computing power information and/or standby information, the computing power information represents a data processing capability of the first IoT device, and the standby information represents a battery endurance capability of the first IoT device.

5. The method according to any one of claims 1 to 4, wherein when the first IoT device is the central device in the first device combination, the method further comprises:
broadcasting (S401), by the first IoT device, the description information of the first IoT device; and
receiving, by the first IoT device, a second connection result sent (S403) by a third IoT device, wherein the second connection result comprises third information, the third information indicates the third IoT device to establish a connection to the first IoT device, the second connection result further comprises an identifier of a central device in a second device combination, and the second device combination is a device combination comprising the third IoT device.

6. The method according to any one of claims 1 to 4, wherein when the first IoT device is the central device in the first device combination, the method further comprises:
receiving, by the first IoT device, a data request message sent by a fourth IoT device, wherein the data request message represents that the fourth IoT device requests to obtain data information from the first IoT device; and
sending, by the first IoT device, a data response message to the fourth IoT device based on the data request message, wherein the data response message comprises the data information required by the fourth IoT device.

7. The method according to any one of claims 1 to 4, wherein when the second IoT device is the central device in the first device combination, the method further comprises:
receiving (S506), by the first IoT device, a central device change request message sent by a third IoT device, wherein the central device change request message indicates that the third IoT device is a central device in a second device combination, and the second device combination comprises the first IoT device, the second IoT device, and the third IoT device; and
sending (S508), by the first IoT device, a disconnection request message to the second IoT device based on the central device change request message, wherein the disconnection request message is used to disconnect from the second IoT device.

8. An IoT device interconnection method, comprising:
receiving, by a second IoT device, description information of a first IoT device, wherein the description information of the first IoT device comprises a first application scenario identifier and performance information of the first IoT device;
determining, by the second IoT device based on at least the first application scenario identifier and a second application scenario identifier of the second IoT device, whether to establish a connection to the first IoT device;
when the second IoT device determines to establish a connection to the first IoT device, determining, by the second IoT device, an identifier of a central device in a first device combination based on the performance information of the first IoT device and performance information of the second IoT device, wherein the first device combination comprises the first IoT device and the second IoT device, and the central device in the first device combination is used by the first device combination to exchange information with an external device, wherein the external device is another device outside of the first device combination; and
sending, by the second IoT device, a connection result to the first IoT device, wherein the connection result comprises first information, the first information indicates the second IoT device to establish a connection to the first IoT device, and the connection result further comprises the identifier of the central device in the first device combination; and
forming, by the second IoT device, the first device combination with the first IoT device.

9. The method according to claim 8, wherein the determining, by the second IoT device based on at least the first application scenario identifier and a second application scenario identifier of the second IoT device, whether to establish a connection to the first IoT device comprises:
if the first application scenario identifier is the same as the second application scenario identifier, determining, by the second IoT device, to establish a same-type connection to the first IoT device; and
the first information specifically indicates to establish the same-type connection between the first IoT device and the second IoT device.

10. The method according to claim 8, wherein the description information of the first IoT device further comprises a device type of the first IoT device; the determining, by the second IoT device based on at least the first application scenario identifier and a second application scenario identifier of the second IoT device, whether to establish a connection to the first IoT device comprises:
if the first application scenario identifier is different from the second application scenario identifier, when the device type of the first IoT device is a device type absent from a device model of the second IoT device, determining, by the second IoT device, to establish a different-type connection to the first IoT device, wherein the device model is a preset set comprising types of devices in a device combination involving the second IoT device; and
the first information specifically indicates to establish the different-type connection between the first IoT device and the second IoT device.

11. The method according to any one of claims 8 to 10, wherein the performance information of the first IoT device comprises computing power information and/or standby information, the computing power information represents a data processing capability of the first IoT device, and the standby information represents a battery endurance capability of the first IoT device.

12. The method according to any one of claims 8 to 10, wherein the method further comprises:
when the second IoT device determines not to establish a connection to the first IoT device, sending, by the second IoT device, second information to the first IoT device, wherein the second information indicates the second IoT device not to establish a connection to the first IoT device.

13. The method according to any one of claims 8 to 10, wherein the first IoT device is the central device in the first device combination; and the method further comprises:
receiving, by the second IoT device, a central device change request message sent by a third IoT device, wherein the central device change request message indicates that the third IoT device is a central device in a second device combination, and the second device combination comprises the first IoT device, the second IoT device, and the third IoT device; and
sending, by the second IoT device, a disconnection request message to the first IoT device based on the central device change request message, wherein the disconnection request message is used to disconnect from the first IoT device.

14. A first IoT device (80, 90), configured to perform the steps performed by the first IoT device in the method according to any one of claims 1 to 7.

15. A second IoT device (80, 90), configured to perform the steps performed by the second IoT device in the method according to any one of claims 8 to 13.

## Patentansprüche

1. IoT-Vorrichtungsverbindungsverfahren, das umfasst:
Rundsenden (S301) von Beschreibungsinformationen der ersten loT-Vorrichtung durch eine erste loT-Vorrichtung, wobei die Beschreibungsinformationen der ersten loT-Vorrichtung eine erste Anwendungsszenariokennung und Leistungsinformationen der ersten loT-Vorrichtung umfassen, die erste Anwendungsszenariokennung von einer zweiten IoT-Vorrichtung, die die Beschreibungsinformationen der ersten loT-Vorrichtung empfängt, verwendet wird, um zu bestimmen (S302), ob eine Verbindung zu der ersten loT-Vorrichtung hergestellt werden soll, die Leistungsinformationen der ersten loT-Vorrichtung von der zweiten loT-Vorrichtung, die die Beschreibungsinformationen der ersten loT-Vorrichtung empfängt, verwendet werden, um eine zentrale Vorrichtung in einer ersten Vorrichtungskombination zu bestimmen, die erste Vorrichtungskombination die erste loT-Vorrichtung und die mit der ersten loT-Vorrichtung verbundene zweite loT-Vorrichtung umfasst und die zentrale Vorrichtung in der ersten Vorrichtungskombination von der ersten Vorrichtungskombination verwendet wird, um Informationen mit einer externen Vorrichtung auszutauschen, wobei die externe Vorrichtung eine andere Vorrichtung außerhalb der ersten Vorrichtungskombination ist; und
Empfangen eines ersten Verbindungsergebnisses durch die erste loT-Vorrichtung, das von der zweiten loT-Vorrichtung gesendet (S303) wurde, wobei das erste Verbindungsergebnis erste Informationen umfasst, die ersten Informationen der zweiten loT-Vorrichtung angeben, dass eine Verbindung zu der ersten loT-Vorrichtung hergestellt werden soll, und das erste Verbindungsergebnis ferner eine Kennung der zentralen Vorrichtung in der ersten Vorrichtungskombination umfasst; Bilden der ersten Vorrichtungskombination durch die erste loT-Vorrichtung mit der zweiten loT-Vorrichtung.

2. Verfahren nach Anspruch 1, wobei die ersten Informationen speziell angeben, dass zwischen der ersten loT-Vorrichtung und der zweiten loT-Vorrichtung eine Verbindung gleichen Typs oder eine Verbindung unterschiedlichen Typs hergestellt werden soll; die Verbindung des gleichen Typs eine Verbindungsart zwischen der ersten loT-Vorrichtung und der zweiten loT-Vorrichtung ist, wenn die Anwendungsszenarien der ersten loT-Vorrichtung und der zweiten loT-Vorrichtung gleich sind; und
die Verbindung unterschiedlichen Typs eine Verbindungsart zwischen der ersten loT-Vorrichtung und der zweiten loT-Vorrichtung ist, wenn die Anwendungsszenarien der ersten loT-Vorrichtung und der zweiten loT-Vorrichtung unterschiedlich sind.

3. Verfahren nach Anspruch 1 oder 2, wobei die Beschreibungsinformationen der ersten loT-Vorrichtung ferner einen Vorrichtungstyp der ersten loT-Vorrichtung umfassen und der Vorrichtungstyp von der IoT-Vorrichtung, die die Beschreibungsinformationen der ersten loT-Vorrichtung empfängt, verwendet wird, um zu bestimmen, ob eine Verbindung zu der ersten loT-Vorrichtung hergestellt werden soll, wenn sich ein Anwendungsszenario der loT-Vorrichtung von einem Anwendungsszenario der ersten loT-Vorrichtung unterscheidet.

4. Verfahren nach einem der Ansprüche 1 bis 3, wobei die Leistungsinformationen der ersten loT-Vorrichtung Rechenleistungsinformationen und/oder Standby-Informationen umfassen, die Rechenleistungsinformationen eine Datenverarbeitungskapazität der ersten loT-Vorrichtung darstellen und die Standby-Informationen eine Batterielebensdauerkapazität der ersten loT-Vorrichtung darstellen.

5. Verfahren nach einem der Ansprüche 1 bis 4, wobei, wenn die erste loT-Vorrichtung die zentrale Vorrichtung in der ersten Vorrichtungskombination ist, das Verfahren ferner umfasst:
Rundsenden (S401) der Beschreibungsinformationen der ersten loT-Vorrichtung durch die erste IoT-Vorrichtung; und
Empfangen eines zweiten Verbindungsergebnisses durch die erste loT-Vorrichtung, das von einer dritten loT-Vorrichtung gesendet (S403) wurde, wobei das zweite Verbindungsergebnis dritte Informationen umfasst, die dritten Informationen der dritten loT-Vorrichtung angeben, dass eine Verbindung zu der ersten loT-Vorrichtung hergestellt werden soll, das zweite Verbindungsergebnis ferner eine Kennung einer zentralen Vorrichtung in einer zweiten Vorrichtungskombination umfasst und die zweite Vorrichtungskombination eine Vorrichtungskombination, die die dritte loT-Vorrichtung umfasst, ist.

6. Verfahren nach einem der Ansprüche 1 bis 4, wobei, wenn die erste loT-Vorrichtung die zentrale Vorrichtung in der ersten Vorrichtungskombination ist, das Verfahren ferner umfasst:
Empfangen einer von einer vierten loT-Vorrichtung gesendeten Datenanforderungsnachricht durch die erste loT-Vorrichtung, wobei die Datenanforderungsnachricht darstellt, dass die vierte loT-Vorrichtung das Erhalten von Dateninformationen von der ersten loT-Vorrichtung anfordert; und
Senden einer Datenantwortnachricht durch die erste loT-Vorrichtung an die vierte loT-Vorrichtung basierend auf der Datenanforderungsnachricht, wobei die Datenantwortnachricht die von der vierten loT-Vorrichtung erforderlichen Dateninformationen umfasst.

7. Verfahren nach einem der Ansprüche 1 bis 4, wobei, wenn die zweite loT-Vorrichtung die zentrale Vorrichtung in der ersten Vorrichtungskombination ist, das Verfahren ferner umfasst:
Empfangen (S506) einer von einer dritten loT-Vorrichtung gesendeten Änderungsanforderungsnachricht für eine zentrale Vorrichtung durch die erste loT-Vorrichtung, wobei die Änderungsanforderungsnachricht für eine zentrale Vorrichtung angibt, dass die dritte loT-Vorrichtung eine zentrale Vorrichtung in einer zweiten Vorrichtungskombination ist, und die zweite Vorrichtungskombination die erste loT-Vorrichtung, die zweite loT-Vorrichtung und die dritte loT-Vorrichtung umfasst; und Senden (S508) einer Trennungsanforderungsnachricht durch die erste loT-Vorrichtung an die zweite loT-Vorrichtung basierend auf der Änderungsanforderungsnachricht für die zentrale Vorrichtung, wobei die Trennungsanforderungsnachricht verwendet wird, um die Verbindung zu der zweiten loT-Vorrichtung zu trennen.

8. IoT-Vorrichtungsverbindungsverfahren, das umfasst:
Empfangen von Beschreibungsinformationen einer ersten loT-Vorrichtung durch eine zweite IoT-Vorrichtung, wobei die Beschreibungsinformationen der ersten loT-Vorrichtung eine erste Anwendungsszenariokennung und Leistungsinformationen der ersten loT-Vorrichtung umfassen;
Bestimmen durch die zweite loT-Vorrichtung basierend auf mindestens der ersten Anwendungsszenariokennung und einer zweiten Anwendungsszenariokennung der zweiten loT-Vorrichtung, ob eine Verbindung zu der ersten loT-Vorrichtung hergestellt werden soll;
wenn die zweite loT-Vorrichtung bestimmt, dass eine Verbindung zu der ersten loT-Vorrichtung hergestellt werden soll, Bestimmen einer Kennung einer zentralen Vorrichtung in einer ersten Vorrichtungskombination durch die zweite loT-Vorrichtung basierend auf den Leistungsinformationen der ersten loT-Vorrichtung und den Leistungsinformationen der zweiten loT-Vorrichtung, wobei die erste Vorrichtungskombination die erste loT-Vorrichtung und die zweite loT-Vorrichtung umfasst und die zentrale Vorrichtung in der ersten Vorrichtungskombination von der ersten Vorrichtungskombination verwendet wird, um Informationen mit einer externen Vorrichtung auszutauschen, wobei die externe Vorrichtung eine andere Vorrichtung außerhalb der ersten Vorrichtungskombination ist; und
Senden eines Verbindungsergebnisses durch die zweite loT-Vorrichtung an die erste IoT-Vorrichtung, wobei das Verbindungsergebnis erste Informationen umfasst, die ersten Informationen der zweiten loT-Vorrichtung angeben, dass eine Verbindung zu der ersten loT-Vorrichtung hergestellt werden soll, und das Verbindungsergebnis ferner die Kennung der zentralen Vorrichtung in der ersten Vorrichtungskombination umfasst; und Bilden der ersten Vorrichtungskombination durch die zweite loT-Vorrichtung mit der ersten loT-Vorrichtung.

9. Verfahren nach Anspruch 8, wobei das Bestimmen durch die zweite loT-Vorrichtung basierend auf mindestens der ersten Anwendungsszenariokennung und einer zweiten Anwendungsszenariokennung der zweiten loT-Vorrichtung, ob eine Verbindung zu der ersten loT-Vorrichtung hergestellt werden soll, umfasst:
falls die erste Anwendungsszenariokennung mit der zweiten Anwendungsszenariokennung identisch ist, Bestimmen, durch die zweite loT-Vorrichtung, dass eine Verbindung des gleichen Typs mit der ersten loT-Vorrichtung hergestellt werden soll; und
die ersten Informationen insbesondere angeben, dass zwischen der ersten loT-Vorrichtung und der zweiten loT-Vorrichtung eine Verbindung des gleichen Typs hergestellt werden soll.

10. Verfahren nach Anspruch 8, wobei die Beschreibungsinformationen der ersten loT-Vorrichtung ferner einen Vorrichtungstyp der ersten loT-Vorrichtung umfassen; das Bestimmen, durch die zweite loT-Vorrichtung basierend auf mindestens der ersten Anwendungsszenariokennung und einer zweiten Anwendungsszenariokennung der zweiten loT-Vorrichtung, ob eine Verbindung zu der ersten loT-Vorrichtung hergestellt werden soll, umfasst:
falls sich die Kennung des ersten Anwendungsszenarios von der Kennung des zweiten Anwendungsszenarios unterscheidet und der Vorrichtungstyp der ersten loT-Vorrichtung ein Vorrichtungstyp, der in einem Vorrichtungsmodell der zweiten loT-Vorrichtung nicht vorhanden ist, ist, Bestimmen, durch die zweite IoT-Vorrichtung, dass eine Verbindung unterschiedlichen Typs zu der ersten loT-Vorrichtung hergestellt werden soll, wobei das Vorrichtungsmodell ein voreingestellter Satz ist, der Vorrichtungstypen in einer Vorrichtungskombination umfasst, an der die zweite loT-Vorrichtung beteiligt ist; und
die ersten Informationen insbesondere angeben, dass eine Verbindung unterschiedlichen Typs zwischen der ersten loT-Vorrichtung und der zweiten loT-Vorrichtung hergestellt werden soll.

11. Verfahren nach einem der Ansprüche 8 bis 10, wobei die Leistungsinformationen der ersten loT-Vorrichtung Rechenleistungsinformationen und/oder Standby-Informationen umfassen, die Rechenleistungsinformationen eine Datenverarbeitungskapazität der ersten loT-Vorrichtung darstellen und die Standby-Informationen eine Batterielebensdauerkapazität der ersten loT-Vorrichtung darstellen.

12. Verfahren nach einem der Ansprüche 8 bis 10, wobei das Verfahren ferner umfasst:
wenn die zweite loT-Vorrichtung bestimmt, dass keine Verbindung zu der ersten loT-Vorrichtung hergestellt werden soll, Senden zweiter Informationen durch die zweite loT-Vorrichtung an die erste loT-Vorrichtung, wobei die zweiten Informationen der zweiten loT-Vorrichtung angeben, dass keine Verbindung zu der ersten loT-Vorrichtung hergestellt werden soll.

13. Verfahren nach einem der Ansprüche 8 bis 10, wobei die erste loT-Vorrichtung die zentrale Vorrichtung in der ersten Vorrichtungskombination ist; und das Verfahren ferner umfasst:
Empfangen einer von einer dritten loT-Vorrichtung gesendeten Änderungsanforderungsnachricht für eine zentrale Vorrichtung durch die zweite loT-Vorrichtung, wobei die Änderungsanforderungsnachricht für die zentrale Vorrichtung angibt, dass die dritte loT-Vorrichtung eine zentrale Vorrichtung in einer zweiten Vorrichtungskombination ist, und die zweite Vorrichtungskombination die erste loT-Vorrichtung, die zweite loT-Vorrichtung und die dritte loT-Vorrichtung umfasst; und
Senden einer Trennungsanforderungsnachricht durch die zweite loT-Vorrichtung an die erste loT-Vorrichtung basierend auf der Änderungsanforderungsnachricht für die zentrale Vorrichtung, wobei die Trennungsanforderungsnachricht verwendet wird, um die Verbindung zu der ersten loT-Vorrichtung zu trennen.

14. Erste loT-Vorrichtung (80, 90), die konfiguriert ist, um die Schritte, die von der ersten loT-Vorrichtung in dem Verfahren nach einem der Ansprüche 1 bis 7 ausgeführt werden, auszuführen.

15. Zweite loT-Vorrichtung (80, 90), die konfiguriert ist, um die Schritte, die von der zweiten loT-Vorrichtung in dem Verfahren nach einem der Ansprüche 8 bis 13 ausgeführt werden, auszuführen.

## Revendications

1. Procédé d'interconnexion de dispositifs IdO, comprenant :
la diffusion (S301), par un premier dispositif IdO, d'informations de description du premier dispositif IdO, dans lequel les informations de description du premier dispositif IdO comprennent un premier identifiant de scénario d'application et des informations de performance du premier dispositif IdO, le premier identifiant de scénario d'application est utilisé par un deuxième dispositif IdO qui reçoit les informations de description du premier dispositif IdO pour déterminer (S302) s'il convient d'établir une connexion avec le premier dispositif IdO, les informations de performance du premier dispositif IdO sont utilisées par le deuxième dispositif IdO qui reçoit les informations de description du premier dispositif IdO pour déterminer un dispositif central dans une première combinaison de dispositifs, la première combinaison de dispositifs comprend le premier dispositif IdO et le deuxième dispositif IdO connecté au premier dispositif IdO, et le dispositif central dans la première combinaison de dispositifs est utilisé par la première combinaison de dispositifs pour échanger des informations avec un dispositif externe, dans lequel le dispositif externe est un autre dispositif en dehors de la première combinaison de dispositifs ; et
la réception, par le premier dispositif IdO, d'un premier résultat de connexion envoyé (S303) par le deuxième dispositif IdO, dans lequel le premier résultat de connexion comprend des premières informations, les premières informations indiquent au deuxième dispositif IdO d'établir une connexion avec le premier dispositif IdO, le premier résultat de connexion comprend en outre un identifiant du dispositif central dans la première combinaison de dispositifs ; la formation, par le premier dispositif IdO, de la première combinaison de dispositifs avec le deuxième dispositif IdO.

2. Procédé selon la revendication 1, dans lequel les premières informations indiquent spécifiquement d'établir une connexion de même type ou une connexion de type différent entre le premier dispositif IdO et le deuxième dispositif IdO ;
la connexion de même type est un mode de connexion entre le premier dispositif IdO et le deuxième dispositif IdO lorsque des scénarios d'application du premier dispositif IdO et du deuxième dispositif IdO sont identiques ; et
la connexion de type différent est un mode de connexion entre le premier dispositif IdO et le deuxième dispositif IdO lorsque des scénarios d'application du premier dispositif IdO et du deuxième dispositif IdO sont différents.

3. Procédé selon la revendication 1 ou 2, dans lequel les informations de description du premier dispositif IdO comprennent en outre un type de dispositif du premier dispositif IdO, et le type de dispositif est utilisé par le dispositif IdO qui reçoit les informations de description du premier dispositif IdO pour déterminer, lorsqu'un scénario d'application du dispositif IdO est différent d'un scénario d'application du premier dispositif IdO, s'il convient d'établir une connexion avec le premier dispositif IdO.

4. Procédé selon l'une quelconque des revendications 1 à 3, dans lequel les informations de performance du premier dispositif IdO comprennent des informations de puissance de calcul et/ou des informations de veille, les informations de puissance de calcul représentent une capacité de traitement de données du premier dispositif IdO, et les informations de veille représentent une capacité d'endurance de batterie du premier dispositif IdO.

5. Procédé selon l'une quelconque des revendications 1 à 4, dans lequel, lorsque le premier dispositif IdO est le dispositif central dans la première combinaison de dispositifs, le procédé comprend en outre :
la diffusion (S401), par le premier dispositif IdO, des informations de description du premier dispositif IdO ; et
la réception, par le premier dispositif IdO, d'un second résultat de connexion envoyé (S403) par un troisième dispositif IdO, dans lequel le second résultat de connexion comprend des troisièmes informations, les troisièmes informations indiquent au troisième dispositif IdO d'établir une connexion avec le premier dispositif IdO, le second résultat de connexion comprend en outre un identifiant d'un dispositif central dans une seconde combinaison de dispositifs, et la seconde combinaison de dispositifs est une combinaison de dispositifs comprenant le troisième dispositif IdO.

6. Procédé selon l'une quelconque des revendications 1 à 4, dans lequel, lorsque le premier dispositif IdO est le dispositif central dans la première combinaison de dispositifs, le procédé comprend en outre :
la réception, par le premier dispositif IdO, d'un message de demande de données envoyé par un quatrième dispositif IdO, dans lequel le message de demande de données représente le fait que le quatrième dispositif IdO demande à obtenir des informations de données du premier dispositif IdO ; et
l'envoi, par le premier dispositif IdO, d'un message de réponse de données au quatrième dispositif IdO sur la base du message de demande de données, dans lequel le message de réponse de données comprend les informations de données requises par le quatrième dispositif IdO.

7. Procédé selon l'une quelconque des revendications 1 à 4, dans lequel, lorsque le deuxième dispositif IdO est le dispositif central dans la première combinaison de dispositifs, le procédé comprend en outre :
la réception (S506), par le premier dispositif IdO, d'un message de demande de changement de dispositif central envoyé par un troisième dispositif IdO, dans lequel le message de demande de changement de dispositif central indique que le troisième dispositif IdO est un dispositif central dans une seconde combinaison de dispositifs, et la seconde combinaison de dispositifs comprend le premier dispositif IdO, le deuxième dispositif IdO et le troisième dispositif IdO ; et
l'envoi (S508), par le premier dispositif IdO, d'un message de demande de déconnexion au deuxième dispositif IdO sur la base du message de demande de changement de dispositif central, dans lequel le message de demande de déconnexion est utilisé pour se déconnecter du deuxième dispositif IdO.

8. Procédé d'interconnexion de dispositifs IdO, comprenant :
la réception, par un deuxième dispositif IdO, d'informations de description d'un premier dispositif IdO, dans lequel les informations de description du premier dispositif IdO comprennent un premier identifiant de scénario d'application et des informations de performance du premier dispositif IdO ;
le fait de déterminer, par le deuxième dispositif IdO sur la base d'au moins le premier identifiant de scénario d'application et un second identifiant de scénario d'application du deuxième dispositif IdO, s'il convient d'établir une connexion avec le premier dispositif IdO ;
lorsque le deuxième dispositif IdO détermine d'établir une connexion avec le premier dispositif IdO, la détermination, par le deuxième dispositif IdO, d'un identifiant d'un dispositif central dans une première combinaison de dispositifs sur la base des informations de performance du premier dispositif IdO et d'informations de performance du deuxième dispositif IdO, dans lequel la première combinaison de dispositifs comprend le premier dispositif IdO et le deuxième dispositif IdO, et le dispositif central dans la première combinaison de dispositifs est utilisé par la première combinaison de dispositifs pour échanger des informations avec un dispositif externe, dans lequel le dispositif externe est un autre dispositif en dehors de la première combinaison de dispositifs ; et
l'envoi, par le deuxième dispositif IdO, d'un résultat de connexion au premier dispositif IdO, dans lequel le résultat de connexion comprend des premières informations, les premières informations indiquent au deuxième dispositif IdO d'établir une connexion avec le premier dispositif IdO, et le résultat de connexion comprend en outre l'identifiant du dispositif central dans la première combinaison de dispositifs ; et la formation, par le deuxième dispositif IdO, de la première combinaison de dispositifs avec le premier dispositif IdO.

9. Procédé selon la revendication 8, dans lequel le fait de déterminer, par le deuxième dispositif IdO sur la base d'au moins le premier identifiant de scénario d'application et un second identifiant de scénario d'application du deuxième dispositif IdO, s'il convient d'établir une connexion avec le premier dispositif IdO comprend :
si le premier identifiant de scénario d'application est identique au second identifiant de scénario d'application, le fait de déterminer, par le deuxième dispositif IdO, d'établir une connexion de même type avec le premier dispositif IdO ; et
les premières informations indiquent spécifiquement d'établir la connexion de même type entre le premier dispositif IdO et le deuxième dispositif IdO.

10. Procédé selon la revendication 8, dans lequel les informations de description du premier dispositif IdO comprennent en outre un type de dispositif du premier dispositif IdO ; le fait de déterminer, par le deuxième dispositif IdO sur la base d'au moins le premier identifiant de scénario d'application et un second identifiant de scénario d'application du deuxième dispositif IdO, s'il convient d'établir une connexion avec le premier dispositif IdO comprend :
si le premier identifiant de scénario d'application est différent du second identifiant de scénario d'application, lorsque le type de dispositif du premier dispositif IdO est un type de dispositif absent d'un modèle de dispositif du deuxième dispositif IdO, le fait de déterminer, par le deuxième dispositif IdO, d'établir une connexion de type différent avec le premier dispositif IdO, dans lequel le modèle de dispositif est un ensemble prédéfini comprenant des types de dispositifs dans une combinaison de dispositifs impliquant le deuxième dispositif IdO ; et
les premières informations indiquent spécifiquement d'établir la connexion de type différent entre le premier dispositif IdO et le deuxième dispositif IdO.

11. Procédé selon l'une quelconque des revendications 8 à 10, dans lequel les informations de performance du premier dispositif IdO comprennent des informations de puissance de calcul et/ou des informations de veille, les informations de puissance de calcul représentent une capacité de traitement de données du premier dispositif IdO, et les informations de veille représentent une capacité d'endurance de batterie du premier dispositif IdO.

12. Procédé selon l'une quelconque des revendications 8 à 10, dans lequel le procédé comprend en outre :
lorsque le deuxième dispositif IdO détermine de ne pas établir une connexion avec le premier dispositif IdO, l'envoi, par le deuxième dispositif IdO, de deuxièmes informations au premier dispositif IdO, dans lequel les deuxièmes informations indiquent au deuxième dispositif IdO de ne pas établir une connexion avec le premier dispositif IdO.

13. Procédé selon l'une quelconque des revendications 8 à 10, dans lequel le premier dispositif IdO est le dispositif central dans la première combinaison de dispositifs ; et le procédé comprend en outre :
la réception, par le deuxième dispositif IdO, d'un message de demande de changement de dispositif central envoyé par un troisième dispositif IdO, dans lequel le message de demande de changement de dispositif central indique que le troisième dispositif IdO est un dispositif central dans une seconde combinaison de dispositifs, et que la seconde combinaison de dispositifs comprend le premier dispositif IdO, le deuxième dispositif IdO et le troisième dispositif IdO ; et
l'envoi, par le deuxième dispositif IdO, d'un message de demande de déconnexion au premier dispositif IdO sur la base du message de demande de changement de dispositif central, dans lequel le message de demande de déconnexion est utilisé pour se déconnecter du premier dispositif IdO.

14. Premier dispositif IdO (80, 90), configuré pour réaliser les étapes réalisées par le premier dispositif IdO dans le procédé selon l'une quelconque des revendications 1 à 7.

15. Deuxième dispositif IdO (80, 90), configuré pour réaliser les étapes réalisées par le deuxième dispositif IdO dans le procédé selon l'une quelconque des revendications 8 à 13.
